# EUROPEAN PATENT APPLICATION

(11) **EP 4 047 872 A1**
(43) Date of publication of application: **24.08.2022**
(21) Application number: 22158040.0
(22) Date of filing: 22.02.2022
(51) Int. Cl.: H04L 9/40, H04W 12/12

(54) **REMOTE BIOMETRIC SYSTEM FOR MONITORING AND AUTHORIZING THE ASSISTANCE ON A COMPUTER**

(30) Priority: 23.02.2021 IT 202100004235
(71) Applicant: Jarvit S.r.l., 20020 Lainate (MI) (IT)
(72) Inventor: ALCARO, FRANCESCO, 88050 AMARONI (CZ) (IT)
(74) Representative: Giuliano, Natalia

(57) **Abstract**

Remote biometric system for monitoring and authorizing the assistance on a computer, configured to authorize a remote access to a server/PC, comprising an electronic device, managed by a data controller, or by another subject, configured to ensure that the remote access, following a remote access request made by a technician in order to perform an assistance intervention on the server/PC is supervised, authorized and registered.

The remote biometric system for monitoring and authorizing the assistance on a computer comprises also at least one embedded software application, in execution on at least one electronic board comprised in the electronic device, and microcontrollers, biometric data acquisition devices, audio recording equipment, video acquisition and implementation of artificial intelligence techniques, for the control of the assistance intervention.

## Description

The present invention relates to a remote biometric system for monitoring and authorizing the assistance on a computer.

In particular, the present invention relates to a remote biometric system for data protection when an assistance intervention is performed by specialized technicians on a server/PC.

The highest known level authentication systems are two-factor authentication systems, e.g., Google Authenticator or physical biometric systems compliant with the "FIDO" Alliance certification program, which allow to access to a specific system through an authorization token. In such a case, the main actor who performs the "login" or "access" is the owner of the authentication device himself.

Several remote identification systems for data protection are currently known.

The patent application CN103873254A, for example, describes a system for extracting a digital sound signature creating a unique system of product classifications, evaluated according to a specific formula.

Furthermore, the patent application US2020137052A1 discloses an authentication system that improves the reliability of data protection.

Finally, the patent application US2018219867A1 discloses a request for access to a user's account is made to an authenticator. The authenticator sends a request for access to the user associated with the user's account. In response to user authorization, the authenticator sends an access link to a service engineer. The service engineer access the link to access the user's account with limited and restricted access. When a remote service session associated with the activated access link is terminated, the authenticator sends a termination of session notice to the user.

However, the known systems suffer from limitations, such as the inability to monitor and authorize a remote access on a computer system to ensure the execution of assistance operations on a server/PC, without violating sensitive data.

The known systems, in particular the aforementioned ones, refer to devices that create a client-server authentication system, where the server autonomously authorizes access by generating a token without any supervision at the time of the request, while the client generates the data to create the token, so that the dialogue is basically between the server automaton and the client, e.g., a technician who accesses to it through the login credentials directly connected to the hardware.

The purpose of the present invention is the realization of an electronic device able to monitor and authorize a remote access on a computer system, in order to guarantee the execution of assistance operations without violating sensitive data, with a technician requiring an access through different entry protocols, the data controller, or another subject, receiving the information on the electronic device and authorizing or denying access by means of a voice command or biometric data so that, from that moment on, everything that the technician performs is logged and, in background, a system implementing artificial intelligence checks that operations performed is appropriate and, otherwise, activates the firewall and drops, i.e., disconnects, the technician.

In particular, the present invention has the purpose of providing a remarkable protection of data when an assistance intervention is performed by specialized technicians, so as to strengthen the creation of a specific protocol to guarantee the data controller. The device is designed to authorize a remote access to a remote server/PC through biometric and voice authentication, recording the operations of the technical part and saving these operations to a safe and encrypted remote storage.

According to the present invention, a remote biometric system for monitoring and authorizing the assistance on a computer is provided, as defined in claim 1.

For a better understanding of the present invention, a preferred embodiment is now described, purely by way of nonlimiting example, with reference to the annexed drawing, in which:

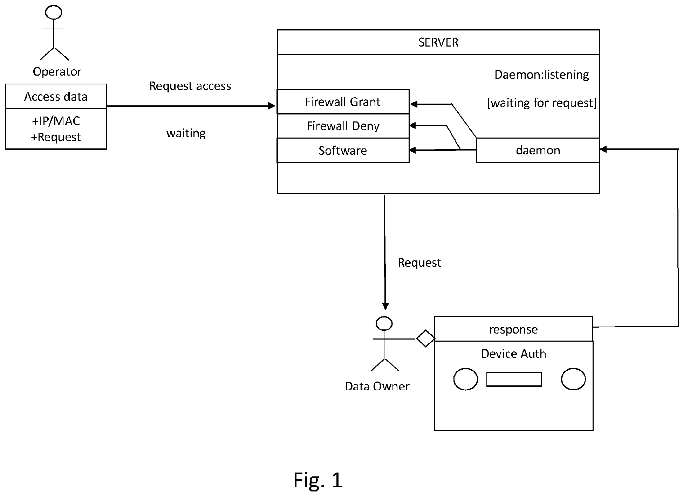

- figure 1 shows a schematic view of a remote biometric system for monitoring and authorizing the assistance on a computer, according to the invention.

With reference to such a figure, a remote biometric system for monitoring and authorizing the assistance on a computer is shown, according to the invention.

In particular, the remote biometric system for monitoring and authorizing the assistance on a computer according to the invention, configured to authorize a remote access to a server/PC, comprises:
- an electronic device, preferably a portable electronic device, managed by a data controller, or another subject, configured to ensure that a remote access following a remote access request made by a technician in order to perform an assistance intervention on the server/PC, in absence of the data controller, is supervised, authorized and registered;
- at least one embedded software application, in execution on at least one electronic board comprised in the electronic device;
- microcontrollers, biometric data acquisition devices, audio recording equipment, video acquisition and implementation of artificial intelligence techniques, for the control of the assistance intervention.

According to an aspect of the invention, the electronic device is configured to monitor and authorize a remote access to a computer system, i.e., the server/PC, in order to ensure the execution of an assistance intervention, without violating sensitive data saved to the server/PC under assistance.

In particular, in use, the technician who must perform an intervention on the server/PC, requests a remote access through various authentication and communication protocols, such as SSH, FTP, TCP, the data controller, or another subject, receives information on the electronic device and authorizes or denies the aforementioned access by means of a voice command or biometric data, and from that moment on, everything that the technician performs is logged, while in the background a system that implements artificial intelligence, checks that the assistance operations performed are congruous and, otherwise, activates the firewall and drops the technician.

According to an aspect of the invention, the electronic device receives information related to the remote access request and is configured to authorize or deny the remote access by means of a voice command or biometric data belonging to the data controller, or to another subject.

According to an aspect of the invention, the remote biometric system for monitoring and authorizing the assistance on a computer comprises, included in the portable electronic device, the following hardware components:
- a case housing the portable electronic device;
- a micro display;
- navigation buttons;
- an electronic board, preferably a microcontroller-based board;
- a fingerprint reader, comprised in the biometric data acquisition devices, able to acquire a fingerprint of the data controller or another subject;
- an integrated microphone able to detect the voice command of the data controller or another subject;
- a GPRS/UMTS module and antenna;
- a GPS antenna and module;
- a lithium-ion configured to power supply said electronic device.

In addition, the remote biometric system for monitoring and authorizing the assistance on a computer comprises several software modules:
- a control firmware of the electronic board, i.e., the aforementioned embedded software application;
- a logging analysis and management application, part of a daemon application installed on the server/PC under assistance by the technician;
- a CMS, Content Management System, application installed on the server/PC subject to the assistance intervention, configured to create and manage a list of technicians and related login levels, and to manage different types of assistance interventions;
- deep learning neural network algorithms, comprised in an IDS, Intrusion Detect System, application, installed on the server/PC under assistance;
- a dataset, part of the IDS application, comprising a list of preset best practice to be followed during the assistance intervention, saved to the server/PC under assistance;
- an encrypting system, installed on the server/PC under assistance, able to secure the connection between the server/PC and the electronic device, an between the technician and the server/PC.

According to an aspect of the invention, during the access request made by the technician in order perform the assistance intervention on the server/PC, the electronic device is connected to the server/PC by means of an encrypted VPN.

According to an aspect of the invention, the IDS application executes the aforementioned artificial intelligence techniques, comprising the deep learning algorithms configured to compare the execution of the assistance intervention with the dataset of preset best practices and to generate alerts in case of non-compliance with said best practices.

According to another aspect of the invention, the embedded software application comprised in the electronic device, following the acquisition of the fingerprint and the voice command belonging to the data controller or to another subject, is configured to generate a first and a second token corresponding respectively to said fingerprint and voice command.

According to an aspect of the invention, the daemon application is connected to the IDS application, and is configured to receive the remote access request made by the technician in order to perform the assistance intervention, to manage the encrypted VPN connecting said server/PC and the electronic device, to send information related to the request of the assistance intervention to the electronic device, to receive the first and the second token from said electronic device in order to authorize the assistance intervention, and to monitor the assistance intervention.

According to an aspect of the invention, the IDS application is configured to interrupt the assistance intervention in case of non-compliance of the assistance intervention, performed by the technician, with the dataset of best practices.

According to an aspect of the invention, the remote biometric system for monitoring and authorizing the assistance on a computer comprises a CMS application, i.e., a Content Management System, installed on the server/PC subject to the assistance intervention, configured to create and manage a list of technicians and related login levels, to manage different types of assistance interventions, and to log events related to assistance interventions performed of the server/PC.

According to an aspect of the invention, the remote system acts through a secure communication between the server/PC from which is made the access request to the data controller, or another subject, with the technician performing the access request through different authentication protocols, such as the aforementioned SSH, FTP, TCP and others. The data controller, or another subject, receives the access request by means of the electronic device, visualizing on the micro display a code specific for the technician and also the following data:
- the technical system of the server/PC under assistance;
- types of assistance and average duration of the assistance intervention;
- basic information regarding IP addresses of the technician.

The data controller, or another subject, is able both to authorize the remote access to the server/PC to be maintained through a biometric scanning of his fingerprints and/or a voice recording of a pre-set message, to use as a voice command, and deny access to the server/PC by acting automatically on a firewall running on the server/PC itself. Each operation can have differentiated authorization levels, for example, several technician or a specific PIN code. Such a PIN code is entered through the navigation buttons on the electronic device in the hand of the data controller, while the information scrolls on the display.

If the technician is authorized, the automated control procedures begin with the aid of the artificial intelligence techniques and well-conceived datasets, such procedures being enclosed within the aforementioned "IDS", Intrusion Detect System, application, according to which each request is associated with a type of intervention, type that requires a series of operations allowed in a given zone of the server/PC and which allows the use of specific protocols and daemons at run-time level. If the remote biometric system detects unauthorized operations, anomalous behavior, or the use of protocols not related to the type of assistance intervention, a kill of the assistance session is performed, the technician is banned and the server/PC, through a firewall installed, enters a protection mode protection not allowing any access other than that of the data controller.

Each assistance session is logged alongside all the operations performed and if possible recorded through a screencast, the detected data are encrypted, classified and placed in a secure storage, available to the data controller.

More in detail, in use, the remote biometric system works according to the following steps:
1. Request Step
   - the daemon application running on the server/PC subject to the assistance intervention, makes authentication requests, to the data controller, in runtime;
   - the encrypted VPN between the server/PC and the electronic device of the data controller is realized;
   - the requesting technician uses his or her personal logins credentials to access the server/PC;
   - the data controller receives the remote access request on the portable electronic device, alongside all data of the requesting technician, including the type of assistance intervention to be performed.
   - the data controller is asked whether to authorize the remote access request or deny it.
2. Authorization Step
   - in case of authorization to access the server/PC is granted, the remote biometric system checks the security levels required for the specific assistance intervention, requires the biometric data and/or the voice command of the data controller, or asks for the biometric data and/or the voice command of another person, within the company of the data controller, owing higher authorization levels;
   - in the event that the authorization for the technician to access the server/PC is denied, the session of the technician himself is closed, the remote access request is saved to the CMS application, so that the aforementioned technician, in order to repeat the request must be unlocked by the data controller having maximum access level.
3.Operational Step
   - In the event that authorization to access the server/PC is granted, the IDS application is activated, each operation of the technician who accesses the server/PC is compared with the best practice dataset, and should the system detect the use of prohibited practices, intrusion of external connections, use of irrelevant software, leakage of sensitive data, the session is closed, the server/PC enters the protection mode, refusing all incoming accesses except those of the data controllers who manage their respective electronic devices;
   - a logging activity, primarily performed by the CMS application, allows to record all the operations, whether they are considered allowed or not allowed and, where available, the remote biometric system performs a video screencast of the monitor of the technician. Such data, including the video screencast, are encrypted, classified and inserted in a compressed file from which is extracted and recorded, in order to define its originality and authenticity, a hash signature, with the event saved to the Content Management System.

According to an aspect of the invention, the embedded software application, or firmware, of the electronic device, manages the electronic board, preferably a microcontroller, of the electronic device, and acquires new fingerprints generating corresponding tokens.

According to an aspect of the invention, the CMS application is a user and event management application, and the 'switch' between hardware and server/PC subject to the assistance interventions. Through the CMS application is allowed to enable and disable technicians, to generate access levels for each type of assistance intervention, authorizing and not authorizing specific protocols or software associated with them, increase and improve datasets for neural networks by refining the detection of the IDS application.

According to another aspect of the invention, the daemon application is designed to perform the steps of request, authentication, communication with the authorizing electronic devices, and to control the operations that are performed by the technician. The daemon application is developed through C++ and is installed, as described, on the server/PC to be maintained. The daemon application is mainly responsible for
- enabling connections with authorizing electronic devices by the encrypted VPN;
- sending data to the authorizing electronic devices;
- sending data concerning the technician;
- sending data concerning the session;
- transmitting data concerning the technician, e.g., IP/MAC address
- sending data about the type of assistance intervention;
- receiving data from the authorizing electronic device or receiving the token related to the biometric data;
- receiving the token concerning the voice command;
- receiving additional codes;
- receiving GPS data;
- receiving the authorization date, i.e., the timestamp;
- analyzing each technician's operation, acting on the control processes, acting on the firewall rules;
- sending the necessary data to the IDS application in order to control operations.

According to another aspect of the invention, the IDS application receives the parameters of the operations from the daemon application, comparing said parameters with the dataset of operations in preset best practice situations. In the event that anomalies are detected, parameterized alerts, as said, are generated using the deep learning algorithms pertaining to neural networks field.

According to one aspect of the invention, the parameters that the IDS system evaluates are the following:
- IT Asset Inventory: classifying the electronic devices in place on the monitored server/PC, in order to calculate normalization and updating situations.
- threat exposure: upgrades of threats currently on the network, updated in real time and from recognized and verified sources. The database is compared with operations in real time.
- controls effectiveness: overall analysis of operations in relation to problem solving, in order to improve the effectiveness of controls.
- breach risk prediction: prediction of the risk by foreseeing future behaviors according to the commands that are being entered for an illogical purpose, with respect to problem solving.
- incident response: an incident reporting system with variable priorities that determines an improvement protocol for risk mitigation in real-time sessions, thus also improving future controls. In a multi-operator incident report or in the case of clustered systems, it is necessary to determine the priority.
- authority: data analysis of authorized interventions to create a reliability coefficient of the data controllers. In this context, the remote biometric system analyzes, on the basis of the authorizations, the "success" of the assistance event, and if n number of authorizations have produced 'x' number of events of the IDS application, the authorization level for that type of intervention will require a higher authorization or a purely technical authorization.

Therefore, the remote biometric system for monitoring and authorizing the assistance on a computer according to the invention includes an electronic device able to authorize a remote access on a computer system in order to ensure the execution of assistance interventions, without violating sensitive data.

Advantageously according to the invention, the remote biometric system for monitoring and authorizing the assistance on a computer provides a high level of data protection when a maintenance intervention is performed by specialized technicians, so as to strengthen the creation of a specific protocol to guarantee the data controller.

It is finally clear that the remote biometric system for monitoring and authorizing the assistance on a computer, described and illustrated herein, may be subject to modifications and variations without departing from the protective scope of the present invention, as defined in the appended claims.

## Claims

1. Remote biometric system for monitoring and authorizing the assistance on a computer, configured to authorize a remote access to a server/PC, comprising:
- an electronic device, managed by a data controller, configured to ensure that the remote access, following a remote access request made by a technician in order to perform an assistance intervention on the server/PC is supervised, authorized and registered;
**characterized in** comprising at least one embedded software application, in execution on at least one electronic board comprised in the electronic device;
- microcontrollers, biometric data acquisition devices, audio recording equipment, video acquisition and implementation of artificial intelligence techniques, for the control of the assistance intervention.

2. Remote biometric system for monitoring and authorizing the assistance on a computer according to claim 1, **characterized in that** said electronic device receives information related to the remote access request and is configured for authorizing or denying the remote access by means of a voice command or biometric data belonging to the data controller.

3. Remote biometric system for monitoring and authorizing the assistance on a computer according to claim 2, **characterized in that** said electronic device comprises: a case housing the electronic device; a display; navigation buttons; at least one electronic board; a fingerprint reader, comprised in the biometric data acquisition devices, able to acquire a fingerprint of the data controller; a microphone able to detect the voice command of the data controller; a GPRS/UMTS module and a related antenna; a GPS antenna and module; a power supply battery.

4. Remote biometric system for monitoring and authorizing the assistance on a computer according to claim 1, **characterized in that** during the access request made by the technician in order perform the assistance intervention on the server/PC, the electronic device is connected to the server/PC by means of an encrypted VPN.

5. Remote biometric system for monitoring and authorizing the assistance on a computer according to claims 2 and 3, **characterized in that** during the access request made by the technician in order to perform the assistance intervention on the server/PC, the electronic device shows the data owner, by means of the display, information consisting of:
- the technical system of the server/PC under assistance;
- types of assistance and average duration of the assistance intervention;
- basic information regarding IP addresses of the technician.

6. Remote biometric system for monitoring and authorizing the assistance on a computer according to claim 1, **characterized in** comprising an IDS, Intrusion Detect System, application installed on the server/PC subject to the access request for the assistance intervention, said IDS application executing the artificial intelligence techniques comprising deep learning algorithms configured to compare the execution of the assistance intervention with a dataset of preset best practices and to generate alerts in case of non-compliance with said preset best practices.

7. Remote biometric system for monitoring and authorizing the assistance on a computer according to claim 3, **characterized in that** the at least one embedded software application comprised in the electronic device, following the acquisition of the fingerprint and the voice command belonging to the data controller, is configured to generate a first and a second token corresponding respectively to said fingerprint and voice command.

8. Remote biometric system for monitoring and authorizing the assistance on a computer according to claims 4, 6 and 7, **characterized in that** the server/PC comprise a daemon application, connected to the IDS application, configured to receive the remote access request made by the technician in order to perform the assistance intervention, to manage the encrypted VPN connecting said server/PC and the electronic device, to send information related to the request of the assistance intervention to the electronic device, to receive the first and the second token from said electronic device in order to authorize the assistance intervention, and to monitor the assistance intervention.

9. Remote biometric system for monitoring and authorizing the assistance on a computer according to claim 6, **characterized in that** the IDS application is configured to interrupt the assistance intervention in case of non-compliance of the assistance intervention, performed by the technician, with the dataset of best practices.

10. Remote biometric system for monitoring and authorizing the assistance on a computer according to claim 1, **characterized in** comprising a CMS, Content Management System, application installed on the server/PC subject to the assistance intervention, configured to create and manage a list of technicians and related login levels, to manage different types of assistance interventions, and to log events related to assistance interventions performed of the server/PC.
